# EUROPEAN PATENT SPECIFICATION

(11) **EP 0 887 159 B1**
(45) Date of publication and mention of the grant of the patent: **07.11.2001**
(21) Application number: 98304409.0
(22) Date of filing: 04.06.1998
(51) Int. Cl.: B26D 3/16, B28D 1/04, B23D 45/12

(54) **A device for cutting a roll**
Vorrichtung zum Sägen von Papierrollen
Dispositif pour scier des rouleaux de papier

(30) Priority: 25.06.1997 US 896504
(43) Date of publication of application: 30.12.1998
(73) Proprietor: NORKOL/FIBRECORE INC., Northlake, IL 60164 (US)
(72) Inventor: Wallace, Marcus T., Murfreesboro, TN 37130 (US)
(74) Representative: Ajello, Michael John

(56) References cited:
- DE-C- 4 439 605
- JP-A- 8 155 948
- US-A- 4 962 748

## Description

The present invention relates to a device for cutting a roll, and particularly a paper roll.

It will be appreciated by those skilled in the art that paper rolls tend to be very large, heavy and bulky, and are not very easy to manoeuvre and to handle.

It will be further appreciated by those skilled in the art that such rolls made often become damaged at their ends. Also, such rolls may be too wide to be fed into a press to create the desired size of product. For example, a user may wish to have an 800mm wide sheet when the only roll width available is 1m. As a result, at the end of many rolls is wasted and cannot be otherwise used.

Presently, a known method of cutting paper is to lug the paper roll onto a band saw and to let the band saw slowly work its way through the paper. Unfortunately, this necessitates the roll being placed on its side for a long period of time thereby possibly warping the roll to assume a non-circular cross-section.

DE-C-44 39 605 discloses a device according tot he preamble of claims 1 and 18. The roll is held by rollers on its side, in a horizontal position. A circular saw is used.

What is required is a system for cutting rolls of material such as paper, which is capable of cutting rolls very efficiently and easily. This device must be capable of easily handling bulky and heavy paper rolls. It must be capable of converting wide rolls into narrower rolls and must also be capable of sanding or finishing the end face of a roll. Such a device is presently lacking in the prior art.

The present invention, which is defined by Claim 1, concerns a roll cutter having a housing. To the housing there is attached a base, a cutter assembly and possibly a hoist assembly. The optional hoist assembly is a telescoping tower which allows the user to engage a roll using a hoist. The hoist can then pick up the roll and move it onto a stand. Otherwise, the roll may be located using external moving devices such as a fork lift truck. Once the roll is located end-on and upright on the stand, the cutting assembly having a cutting tower, a cutting arm and a saw, can be placed at the desired level of cut. A saw can then be used to cut the end region of a roll to the desired width. The saw blade may have a sanding face, or a sanding wheel can replace the saw blade after the roll is cut to length to sand the end surface of the roll.

An object of the present invention is to provide a cutter which has a stand which can easily receive a roll.

Another object of the present invention is to provide a system for moving and handling a roll.

Another object of the present invention is to provide a device which can be adjusted to cut the roll to the desired width.

Another object of the present invention is to provide a system which is economical, easy to use and easy to manufacture.

Another object of the present invention is to provide a system for sanding or finishing an end face of a roll.

According to the present invention, there is provided a device for cutting a roll in a direction substantially perpendicular to the axis of the roll, comprising a housing, means attached to said housing for receiving said roll, and means attached to said housing for cutting said roll; characterised in that the roll is received by said means for receiving it in an end-on and substantially upright position.

An embodiment of the invention will now be described, with reference to the accompanying drawings, in which:-
Fig. 1 is a perspective view of a roll cutter made in accordance with the invention;.
Fig. 2 is a perspective view showing the roll cutter cutting a roll from a lower saw mount;
Fig. 3 is a perspective view of the roll cutter showing a saw arm mounted on the lower saw mount;
Fig. 4 is a perspective view of the roll cutter showing the saw being mounted on the lower saw mount and cutting the core of a roll;
   and
Fig. 5 is a perspective view of the roll cutter showing the cutter arm attached to an upper saw mount and cutting the core of the roll.

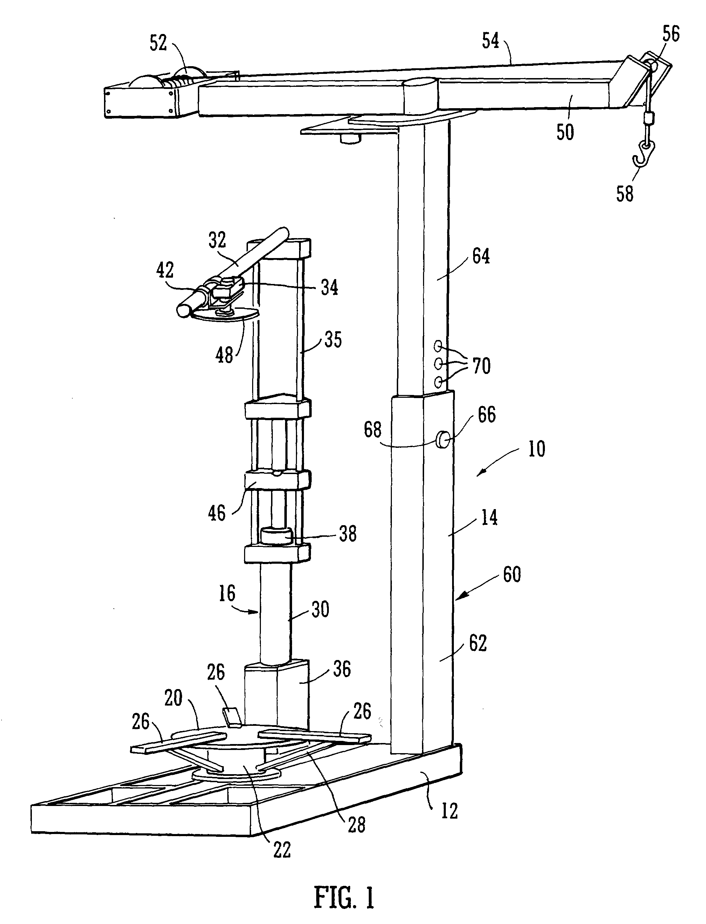

Referring now to Fig. 1. there is shown generally at 10 the roll cutter of the present invention. Roll cutter 10 has a housing 12 which is preferably mounted to, or placed on, the ground. A roll to be cut is received on a platform 20 which is attached to the housing 12. Platform 20 stands on a column 22 which is attached to the housing 12.

Preferably, extending from the platform 20 are arms 26 which are supported by bracing members 28 extending one between each arm and the base of column 22. In the preferred embodiment, column 22 is capable of rotation with respect to the housing 12 and the platform 20 preferably lies centrally on the housing 12.

In order to move a roll, there is provided a hoist assembly 14 having a hoist tower 60 preferably attached to one corner or peripheral region of the housing 12. Hoist tower 60 preferably consists of lower section 62 and an upper section 64 which is telescopically interconnected. Upper section 64 is thus capable of being raised with respect to lower section 62 and held in place by a pin 66 placed in a hole 68 in lower section 62 and one of a number of orifices 70 in upper section 64 for adjustment purposes. At the top of upper section 64 there is provided a hoist 50 which has a winch 52 controlling a cable 54. The cable runs over a pulley 56 to raise and lower a hook 58. The cable 54 can be placed around a roll or through its core. If no hoist assembly 14 is provided then a fork lift or other external mechanism may be used to place a roll on the platform.

Generally shown at 16 is the cutting assembly of the present invention. This assembly has a lower portion 36 preferably attached to the housing 12 in a peripheral region thereof and at a position remote from the hoist tower 60 a cutter tower 30 is adapted to raise and lower an upper portion 35 with respect to the lower portion 36. Such movement is performed by a fluidic piston and cylinder assembly 38. The upper portion 35 preferably has an upper saw mount 44 and a lower saw mount 46. A cutter arm 32 is releasably attached selectively to the upper and lower saw mount 44 or 46 using standard means of attachment such as screws, brackets and the like. Cutter arm 32 carries a slide bracket 42 for attachment of a saw 34 to the cutter arm 32. The bracket 42 may be fixed to the arm 32 or slidably adjustable thereon. A standard saw blade 48 is connected to the saw 34. The lower face of the saw blade 48 or its peripheral region may be of an abrasive nature thus to act as a sanding face. Alternatively, the blade 48 may be replaced by a sanding blade after a cutting operation has been performed.

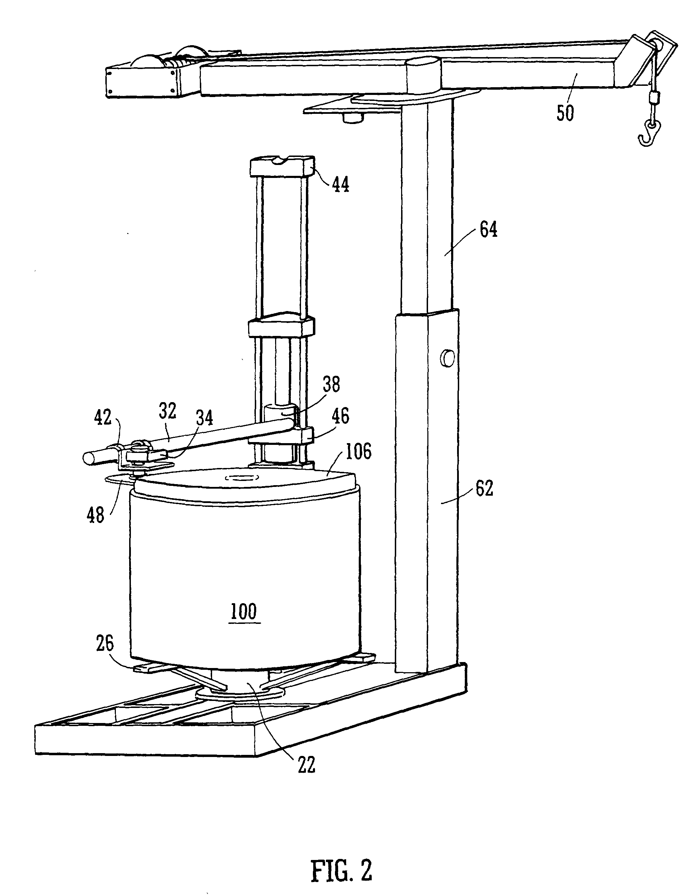

Referring now to Fig. 2, there is shown a roll cutter as described in relation to Fig. 1 wherein the cutter arm 32 is attached to the lower saw mount 46 thus to enable an end region 106 of a paper roll 100 to be cut.

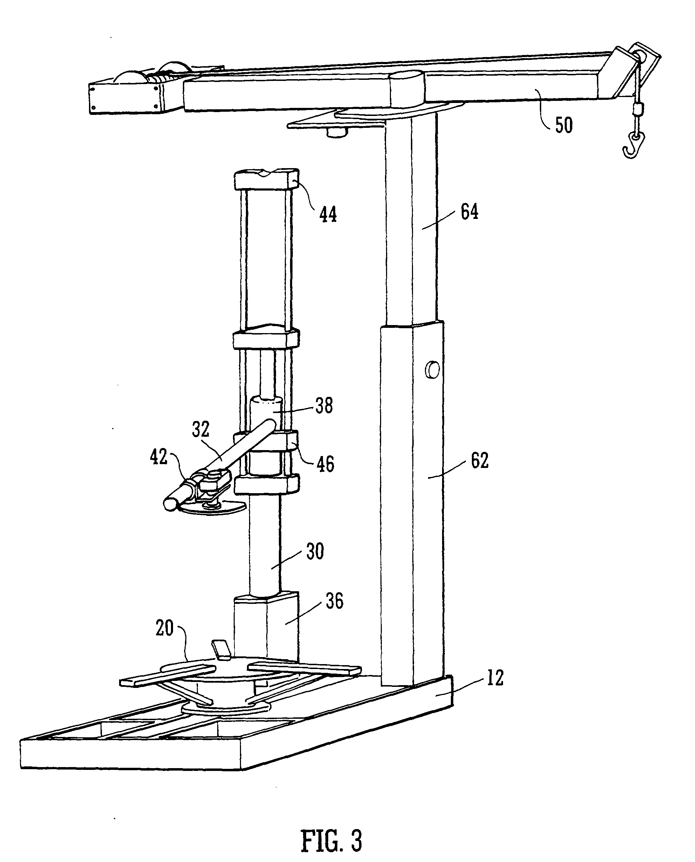

Referring now to Fig. 3, there is shown more clearly the cutter arm 32 attached to the lower saw mount 46 as opposed to the upper saw mount 44 as in Fig. 1.

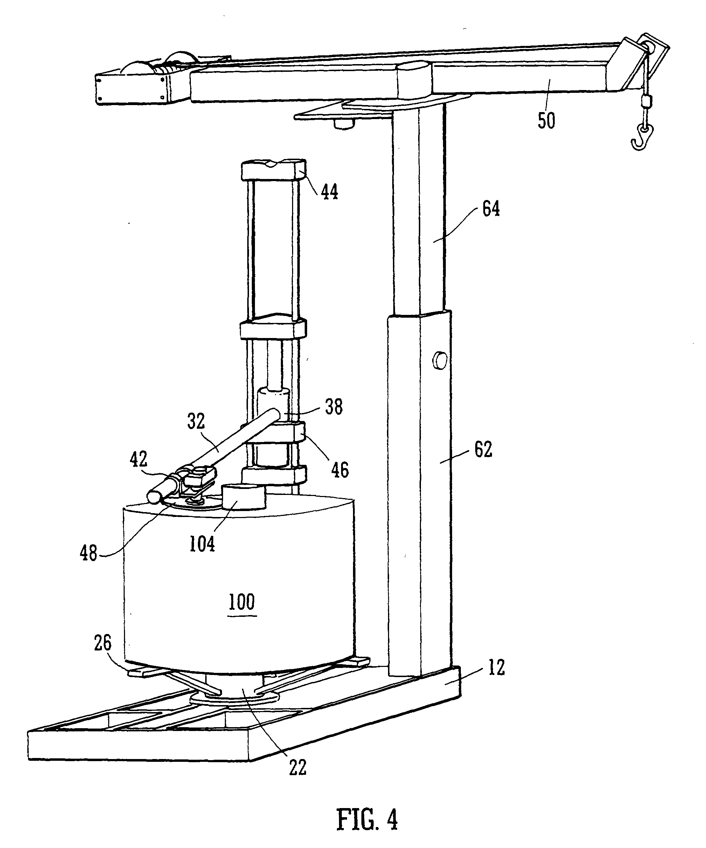

Referring now to Fig. 4 there is illustrated a saw blade 48 cutting a core 104 at the upper end of a paper roll 100.

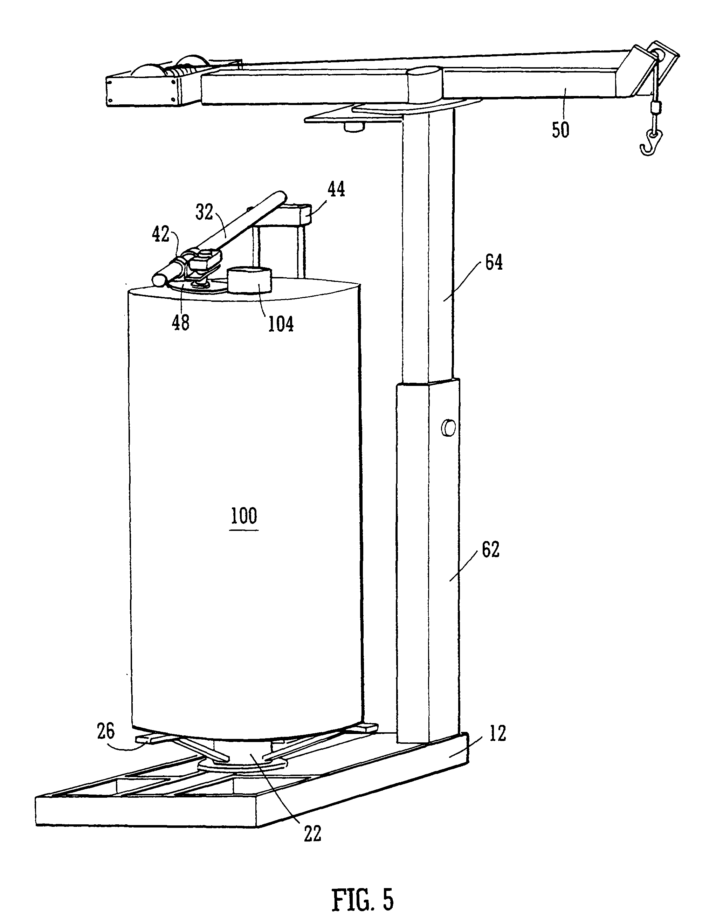

Referring now to Fig. 5, there is illustrated a roll cutter in the process of cutting a wide or tall roll 100 wherein the cutter arm 32 is, in this case, attached to the upper saw mount 44 as in Fig. 1.

The piston and cylinder assembly 38 may be hydraulically or pneumatically operated and the saw 34 may be driven by a hydraulic or pneumatic motor. Furthermore, the winch 52 may be hydraulically or pneumatically operated. Preferably, the hoist 50 is rotatably mounted on the top of the upper section 64 of the hoist tower 60, and the cutter tower 30 is rotatably mounted on the lower portion 36 and is capable of being driven relative thereto to enable the cutter to move inwardly towards the centre of a roll to be cut.

It is not intended to limit the invention to the above example only, many variations such as might readily occur to one skilled in the art, being possible without departing from the scope of the following claims.

## Claims

1. A device for cutting a roll in a direction substantially perpendicular to the axis of the roll, comprising:
a housing (12)
b. means (26) attached to said housing for receiving said roll;
and
c. means (48) attached to said housing for cutting said roll, **characterised in that** the roll is received by said means for receiving it in an end-on and substantially upright position.

2. A device according to Claim 1, further comprising means attached to said housing for moving a roll.

3. A device according to Claim 1, wherein said means attached to said housing for receiving said roll comprises a stand attached to said housing.

4. A device according to Claim 3, wherein said stand comprises:
a. a column attached to said housing;
b. a rotatable platform attached to said column;
c. arms attached to said platform;
and
d. supports attached to said arms.

5. A device according to Claim 1, wherein said means attached to said housing for cutting said roll comprises a cutter assembly.

6. A device according to Claim 5, wherein said cutter assembly comprises:
a. a cutter tower extending from said housing;
b. a cutter arm attached to said cutter tower;
c. a rotatable saw blade attached to said cutter arm,
and
d. means to enable the saw blade to move inwardly towards the centre of a roll to be cut.

7. A device according to Claim 6, wherein said cutter tower is telescopically extendible.

8. A device according to Claim 6, wherein said cutter tower comprises:
a. a lower portion attached to said housing;
b. an upper portion telescopically attached to said lower portion;
and
c. means attached to said lower portion for raising and lowering said upper portion.

9. A device according to Claim 8, wherein said means attached to said lower portion for raising and lowering said upper portion comprises a piston and cylinder assembly.

10. A device according to Claim 6, wherein said cutter arm is rotatably attached to said cutter tower.

11. A device according to Claim 6, wherein said saw blade is slidably attached to said cutter arm.

12. A device according to Claim 5, wherein said cutter tower has an upper saw mount and a lower saw mount to which the cutter arm may be selectively attached.

13. A device according to Claim 2, wherein said means attached to said housing for moving said roll comprises a hoist assembly.

14. A device according to Claim 13, wherein said hoist assembly comprises a driven hoist consisting of a cable and winch.

15. A device according to Claim 14, wherein the driven hoist is mounted on a height adjustable hoist tower.

16. A device according to Claim 1, further comprising means for sanding an end face of said roll.

17. A device according to Claim 16, wherein said means for sanding said end face of said roll comprises a blade having a sanding edge.

18. A device for cutting a roll in a direction substantially perpendicular to the axis of the roll, comprising:
a. a housing
b. means attached to said housing for receiving said roll;
c. means attached to said housing for cutting said roll;
d. **characterised by** means attached to said housing for sanding an edge of said roll; and in that the roll is received by said means for receiving,it in an end-on and substantially upright position.

19. A device according to Claim 18, further comprising means for moving said roll.

## Patentansprüche

1. Vorrichtung zum Schneiden einer Rolle in einer Richtung, die zu der Achse der Rolle im wesentlichen rechtwinkelig ist, mit:
a. einem Gehäuse (12),
b. einer Einrichtung (26), die an dem Gehäuse befestigt ist, um die Rolle zu empfangen; und
c. einer Einrichtung (48), die an dem Gehäuse befestigt ist, zum Schneiden der Rolle,
**dadurch gekennzeichnet, dass** die Rolle durch die Einrichtung empfangen wird, um sie in einer Position mit dem Ende voran und im wesentlichen aufrecht zu empfangen.

2. Vorrichtung nach Anspruch 1, weiter mit einer Einrichtung, die an dem Gehäuse befestigt ist, zum Bewegen einer Rolle.

3. Vorrichtung nach Anspruch 1, wobei die Einrichtung, die an dem Gehäuse befestigt ist, um die Rolle zu empfangen, einen Ständer aufweist, der an dem Gehäuse befestigt ist.

4. Vorrichtung nach Anspruch 3, wobei der Ständer aufweist:
a. eine Säule, die an dem Gehäuse befestigt ist;
b. eine drehbare Plattform, die an der Säule befestigt ist;
c. Arme, die an der Plattform befestigt sind; und
d. Stützen, die an den Armen befestigt sind.

5. Vorrichtung nach Anspruch 1, wobei die an dem Gehäuse befestigte Einrichtung zum Schneiden der Rolle eine Querschneiderbaugruppe aufweist.

6. Vorrichtung nach Anspruch 5, wobei die Querschneiderbaugruppe aufweist:
a. einen Querschneiderturm, der sich von dem Gehäuse aus erstreckt;
b, einen Querschneiderarm, der an dem Querschneiderturm befestigt ist;
c. ein drehbares Sägeblatt, das an dem Querschneiderarm befestigt ist; und
d. eine Einrichtung, die ermöglicht, das Sägeblatt einwärts zu dem Zentrum einer zu schneidenden Rolle zu bewegen.

7. Vorrichtung nach Anspruch 6, wobei der Querschneiderturm teleskopisch ausfahrbar ist.

8. , Vorrichtung nach Anspruch 6, wobei der Querschneiderturm aufweist:
a. einen unteren Teil, der an dem Gehäuse befestigt ist;
b. einen oberen Teil, der an dem unteren Teil teleskopisch befestigt ist; und
c. eine Einrichtung, die an dem unteren Teil befestigt ist, zum Anheben und Absenken des oberen Teils.

9. Vorrichtung nach Anspruch 8, wobei die Einrichtung, die an dem unteren Teil befestigt ist, um den oberen Teil anzuheben und abzusenken, eine Kolben-Zylindervorrichtung aufweist.

10. Vorrichtung nach Anspruch 6, wobei der Querschneiderarm an dem Querschneiderturm drehbar befestigt ist.

11. Vorrichtung nach Anspruch 6, wobei das Sägeblatt an dem Querschneiderarm verschiebbar befestigt ist.

12. Vorrichtung nach Anspruch 5, wobei der Querschneiderturm eine obere Sägehalterung und eine untere Sägehalterung hat, an welchen der Querschneiderarm wahlweise befestigt werden kann.

13. Vorrichtung nach Anspruch 2, wobei die Einrichtung, die an dem Gehäuse befestigt ist, um die Rolle zu bewegen, eine Hubvorrichtung aufweist.

14. Vorrichtung nach Anspruch 13, wobei die Hubvorrichtung ein angetriebenes Hebezeug aufweist, das aus einem Seil und einer Seilwinde besteht.

15. Vorrichtung nach Anspruch 14, wobei das angetriebene Hebezeug an einem in der Höhe einstellbaren Hubturm befestigt ist.

16. Vorrichtung nach Anspruch 1, weiter mit einer Einrichtung zum Schmirgeln einer Endfläche der Rolle.

17. Vorrichtung nach Anspruch 16, wobei die Einrichtung zum Schmirgeln der Endfläche der Rolle ein Blatt aufweist, das einen Schmirgelrand hat.

18. Vorrichtung zum Schneiden einer Rolle in einer Richtung, die zu der Achse der Rolle im wesentlichen rechtwinkelig ist, mit:
a. einem Gehäuse;
b, einer Einrichtung, die an dem Gehäuse befestigt ist, zum Empfangen der Rolle;
c. einer Einrichtung, die an dem Gehäuse befestigt ist, zum Schneiden der Rolle;
d. **gekennzeichnet durch** eine Einrichtung, die an dem Gehäuse befestigt ist, zum Schmirgeln eines Randes der Rolle; und **dadurch**, dass die Rolle **durch** die Einrichtung empfangen wird, um sie in einer Position mit dem Ende voran und im wesentlichen aufrecht zu empfangen.

19. Vorrichtung nach Anspruch 18, weiter mit einer Einrichtung zum Bewegen der Rolle.

## Revendications

1. Dispositif pour couper un rouleau dans une direction sensiblement perpendiculaire à l'axe du rouleau, comprenant :
a. un bâti (12)
b. un moyen (26) attaché audit bâti pour recevoir ledit rouleau; et
c. un moyen (48) attaché audit bâti pour couper ledit rouleau, **caractérisé en ce que** le rouleau est reçu par ledit moyen destiné à le recevoir en une position sur une extrémité et sensiblement debout.

2. Dispositif selon la revendication 1, comprenant en outre un moyen attaché audit bâti pour déplacer un rouleau.

3. Dispositif selon la revendication 1, dans lequcl ledit moyen attaché audit bâti pour recevoir ledit rouleau comprend un pied attaché audit bâti.

4. Dispositif selon la revendication 3, dans lequel ledit pied comprend :
a. une colonne attachée audit bâti;
b. une plate-forme rotative attachée à ladite colonne;
c. des bras attachés à ladite plate-fonne; et
d. des supports attachés auxdits bras.

5. Dispositif selon In revendication 1, dans lequel ledit moyen attaché audit bâti pour couper ledit rouleau comprend un ensemble de coupe.

6. Dispositif selon la revendication 5, dans lequel ledit ensemble de coupe comprend :
a. une tour de coupe s'étendant depuis ledit bâti;
b. un bras de coupe attaché à ladite tour de coupe;
c. une lame de scie rotative attachée audit bras de coupe; et
d. un moyen pour permettre à la lame de scie de se déplacer vers l'intérieur, vers le centre d'un rouleau à couper.

7. Dispositif selon la revendication 6, dans lequcl ladite tour de coupe est une tour extensible téléscopique.

8. Dispositif selon la revendication 6, dans lequel ladite tour de coupe comprend :
a. une partie inférieure attachée audit bâti;
b. une partie supérieure attachée de manière téléscopique à ladite partie inférieure; et
c. un moyen attaché à ladite partie inférieure pour élever et abaisser ladite partie supérieure.

9. Dispositif selon la revendication 8, dans lequel ledit moyen attaché à ladite partie inférieure pour élever et abaisser ladite partie supérieure comprend un ensemble à piston et cylindre.

10. Dispositif selon la revendication 6, dans lequel ledit bras de coupe est attaché à rotation à ladite tour de coupe.

11. , Dispositif selon la revendication 6, dans lequel ladite lame de scie est attachée à coulissement audit bras de coupe.

12. Dispositif selon la revendication 5, dans lequel ladite tour de coupe comporte un porte-scie supérieur et un porte-scie inférieur auxquels peut être sélectivement attaché le bras de coupe.

13. Dispositif selon la revendication 2, dans lequel ledit moyen attaché audit bâti pour déplacer ledit rouleau comprend un ensemble de levage.

14. Dispositif selon la revendication 13, dans lequel ledit ensemble de levage comprend un élévateur entraîné constitué d'un câble et d'un treuil.

15. Dispositif selon la revendication 14, dans lequel l'élévateur entraîné est monté sur une tour de levage réglable en hauteur.

16. Dispositif selon la revendication 1, comprenant en outre un moyen servant à poncer une face d'extrémité dudit rouleau.

17. Dispositif selon la revendication 16, dans lequel ledit moyen servant à poncer ladite face d'extrémité dudit rouleau comprend une lame ayant un bord de ponçage.

18. Dispositif pour couper un rouleau dans une direction sensiblement perpendiculaire à l'axe du rouleau, comprenant :
a. un bâti;
b. un moyen attaché audit bâti pour recevoir ledit rouleau;
c. un moyen attaché audit bâti pour couper ledit rouleau;
d. **caractérisé par** un moyen attaché audit bâti pour poncer un bord dudit rouleau; et en ce que le rouleau est reçu par ledit moyen destiné à le recevoir en une position sur une extrémité et sensiblement debout.

19. Dispositif selon la revendication 18, comprenant en outre un moyen servant à déplacer ledit rouleau.
